Europäisches Patentamt

European Patent Office

Office européen des brevets

(19)

(11) EP 1 039 391 A2

(12) EUROPEAN PATENT APPLICATION

(43) Date of publication:
27.09.2000 Bulletin 2000/39

(51) Int Cl.$^7$: G06F 11/36

(21) Application number: 00301769.6

(22) Date of filing: 03.03.2000

(84) Designated Contracting States:
AT BE CH CY DE DK ES FI FR GB GR IE IT LI LU
MC NL PT SE
Designated Extension States:
AL LT LV MK RO SI

(30) Priority: 04.03.1999 GB 9905000

(71) Applicant: The Secretary of State for Trade and
Industry of Her Majesty's Britannic Government
London SW1H 0ET (GB)

(72) Inventors:
• Brady, Frank A.
Teddington, Middlesex TW11 0LW (GB)
• Gardner, Steve C.
Teddington, Middlesex TW11 0LW (GB)

(74) Representative: Jehan, Robert et al
Williams, Powell & Associates,
4 St Paul's Churchyard
London EC4M 8AY (GB)

(54) Method and apparatus for testing of a finite state machine

(57) The invention relates to goal directed searching of finite state machines which includes the steps of determining properties of the behaviour of individual components of the state machine, using the determined properties to infer properties of the solution as a whole; exploiting any parallelism between the behaviour of individual components, determining where different possible solutions have behaviour in common, and when commonality is determined to exist, developing these solutions together by exploiting their commonality as far as possible. This goal directed searching can be used to generate the traces which will form the basis of the tests of the product which is described by the EFSM. For very large state spaces, this can often be the only way of automating test generation. Goal directed searching can also be used with simulator tools, to allow the user to go directly to the behaviour of interest.

EP 1 039 391 A2

**Description**

The present invention relates to a system and method for providing goal direct searching of, for example, EFSMs.

Before describing the problem at hand in detail, it is considered best to explain the meaning of the terms: EFSM, concurrent operations and state space searching.

The finite state machine (FSM) concept is of use when describing an operation which is comprised of a set of well defined actions that have to be performed in well defined orders. For simplicity consider as an example making a telephone call:

1) take as an initial state the telephone with the handset resting in the cradle i.e. the "on hook" state;
2) the action of lifting the handset changes the state to "off hook";
3) the action of dialling the number changes the state to "call set-up".

This description could be continued until the call is finished. However, even at this trivial level simple analysis reveals two sorts of fault with the FSM description:

a) in the "on hook" state the phone may start to ring. From the user's point of view, looking at the phone he/she has no way of predicting when this may happen and no way of making it happen. From this point of view it is an internal action of the phone. Furthermore it is an internal action which has changed the state of the telephone. If the handset is picked up and numbers are dialled, this will not be successful in making a call and will only annoy the person trying to talk. Thus all the possible actions applicable in this state had not been identified;
b) the second fault is in the sequence of the operations to be performed. If dialling is begun immediately on lifting the handset, i.e. in the "off hook" state, the call will not be set up because it is necessary to wait for the exchange to indicate that it is ready to accept input by returning dial tone and thus changing the state to "ready to dial".

From this description it can be seen that the strength of the FSM technique is that it allows a system to be described and analysed in a simple, consistent state by state way.

*Extended Finite State Machine*

To continue the simple telephone call analogy consider the state of "conversation in progress".

This state could apply to the calling phone or the called phone. In both cases the state is very similar but not identical; i.e. in some phone systems the called party cannot terminate the call and the calling party continues to pay until it achieves the "on hook" state.

In a case like this there are two options. We can create sets of almost identical states or we can give a state a "flag" which distinguishes the 'almost identical states'. In the latter case some of the actions associated with the state may always be applicable but some will be "guarded" by the "flag" such that they are only applicable when the "flag" has a particular value. This form of state machine with flags is called an Extended Finite State Machine (EFSM). EFSMs are particularly useful in complex descriptions where it is possible to reach a particular state by a number of different routes through the FSM and the flag will indicate the route that has been taken in a particular instance. "Flags" may themselves become very large and in such cases may be referred to as "state vectors".

*Concurrent operation*

Returning to the simple telephone example, it is easy to see that whilst the conversation is in progress a separate but related process is timing the call in order to be able to charge the customer. Such a process is said to be operating concurrently or in parallel.

*State space searching*

So far the examples have been very small. The example that the algorithms were developed on has a potential state space of about a million billion billion billion billion states. This is unmanageably large. Fortunately there are only a limited number of these states that we want to analyse.

Thus one of the reasons for state space searching is to get to and display a state of interest in such a way that we are certain that the state vector is legal. We are then able to explore the behaviour associated with that state.

Another reason for searching state spaces is the desire to test EFSMs. A test of an EFSM is a controlled sequence of actions which moves to a particular state in the EFSM followed by an action that uniquely confirms that the EFSM has reached the desired state. If we keep a record of the actions that are required to achieve the desired state in the EFSM then this record can be used to drive a test machine which is testing the real application which is described by the EFSM.

The present invention seeks to provide improved state space searching.

According to an aspect of the present invention, there is provided a method of searching for a state machine including the steps of determining properties of the behaviour of individual components of the state machine, using the determined properties to infer properties of the solution as a whole; exploiting any parallelism between the behaviour of individual components, determining where different possible solutions have behaviour in common, and when commonality is determined to exist, developing these solutions together by exploiting their commonality as far as possible.

Preferably, the steps of using behavioural properties of the individual components and exploiting any parallelism include the steps of noting that if the goal requires a predetermined variable (Va) to be set to true, and then determining that any path to the goal includes a transition that sets (Va) to true.

Advantageously, when a transition is found that sets (Va) and effects no other variable, (Va) is solved in isolation. So the basic idea is to build up a picture of transitions which will be needed to set each variable to the required value, and the more independently these transitions act, the simpler it is to integrate them into a complete solution.

Turning to the third step of exploiting commonality, the method preferably looks at the transitions which can be used to set (Va). It will usually be found that they have some requirements on the value for other variables that are common to all of them. For example, we may find that all the transitions that set (Va) to true all need a variable (Vb) to be set to true before any of them can occur (in real examples, Vb set to true might indicate that a connection has been set up). It can then be known that whichever transition is used to set (Va), it will be necessary to precede it with a transition to set (Vb).

In effect, the preferred system deals with all possible ways of setting (Va) at the same time, and continues this for as long as they have something in common. This allows iterative building up of a picture of the properties any solution must satisfy, rather than examining each possible solution in turn.

Thus, goal directed searching as taught herein can be used to generate the traces which will form the basis of the tests of the product which is described by the EFSM. For very large state spaces, this can often be the only way of automating test generation. Goal directed searching can also be used with simulator tools, to allow the user to go directly to the behaviour of interest. It also offers an efficient way of deciding if a given state (or set of states) is reachable, which is a way of investigating the properties of the EFSM description.

We chose to work with EFSMs as they offer the simplest way of describing a behaviour that has parallelism. We only consider EFSMs for which all variables have a bounded set of values, so we will not need to distinguish between the state variable and the other variables of our EFSM. We model a behaviour with parallelism between various parts of the system by using different variables to describe the behaviour of each of these parts. A transition in the EFSM will then affect variables corresponding to only one of these parts. If we also have some synchronisation between two parts, we model this with transitions which effect variables corresponding to both of the parts. We will refer to individual variables and their associated possible behaviour as the components of our EFSM.

The algorithm we use is complicated to implement. It is therefore simpler to implement the algorithm for EFSMs, and convert other formal descriptions to the EFSM representation for searching (ensuring we preserve parallelism when we convert). We have developed a tool for producing such EFSM models from basic LOTOS. The tool does this without state space expansion, and ensures parallel processes will be modelled with distinct components. It is also possible to devise a tool to generate EFSMs from SDL (with data).

An embodiment of the present invention is described below, by way of example only, with reference to the accompanying drawing in which the sole Figure, shows an embodiment of goal directed searching systems.

The present invention can provide goal direct searching of EFSMs, for example, in a structured manner, thereby generating results in a much shortened time frame relative to prior art "blind" testing methods. Moreover, the present invention can enable the behaviour of a product under development to the predicted with accuracy, in order to assist in the development of the product and to obtain predictable product behaviour.

The principle use of the preferred embodiment is in automated test generation. Bodies such as ETSI and ISO produce standards which describe the behaviour of communication protocols (such as for email or file transfer). There is then a commercial need to develop test suites which verify that a product that claims to implement a particular protocol behaves correctly. Currently the development of the test suites is a manual process which is both costly and time consuming. The purpose of automated test generation is to allow these test suites to be produced in a cheaper and more timely fashion.

An implementation of the invention produces the test script for an EFSM tester.

The preferred embodiments form part of a larger system for looking at automating various problems in tesing, and at testing the OSI Distributed Processing protocol (DTP) in particular. The algorithm forms part of a larger tool which has successfully been used to generate TTCN tests from Test Purposes for DTP. DTP is used to coordinate resources held at several different nodes across a network. The protocol is only concerned with the coordination - date exchange aspects are left to an unspecified slave protocol. So DTP involves no data exchange; all its state space is used to control behaviour.

The preferred embodiment has 108 variables over sets of size $2^{91}.3^4.7^1.8^1.16^2.30^3$. (i.e. 91 sets of size 2, 4 of size 3 etc.); so the state space has $2^{140}$ states. If it used the normal state table representation with one cell for each transistion, it would need $10^{12}$ cells to represent DTP. Searching DTP was the main objective of the work, but it was also designed to apply equally well to other protocols.

The applicant is not aware of any work looking at a goal directed searching of ESFMs, for example goal directed searching using LOTOS. This uses a static analysis of the specification to produce a filter which narrows the possible transition system. The general idea is to set up guides (or filters) to where the behaviour of interest may be found, and then to search through the possible guides in a prioritised order (based on heuristic weighting). Although it is set in a very different context, we can compare its behaviour by considering what the equivalent of its behaviour would be on an ESFM model of the LOTOS specification.

The system can be implemented in hardware or software, the described embodiment being in software form implemented in any suitable computer.

Goal Directed Searching is useful for producing tests paths from Test Purposes. It is also useful as an addition to simulator tools, and for deciding questions of reachabiltiy and is used to generate preambles and postambles from test purposes. The description below presents an embodiment of system for goal directed searching, which has been successfully used to search state space with $2^{140}$ states. Typical search times for this space are between 30 seconds and 3 minutes. It has also been used to search ESFM's generated from basic LOTOS, and from SDL. The embodiment is based on an analysis of directed graphs whose vertex sets are castesian products.

For very large state spaces, this can often be the only way of automating test generation. It can also be used with simulator tools, to allow the user to go directly to the behaviour of interest. It also offers an efficient way of deciding if a given state (or set of states) is reachable.

The method we described herein was designed to search ESFMs. We chose to work with ESFMs as they offer the simplest way of describing a behaviour that has parallelism, although the method could be readily adapted for other simulation mechanisms.

The preferred embodiments considers ESFMs for which all variables have a bounded set of values so does not need to distinguish between the state variable and the other variables of the ESFM. It models a behaviour with parallelism between various parts by using different variables to describe the behaviour of each of these parts. A transition in the EFSM will then affect variables corresponding to only one of these parts. If there is some synchronisation between two parts this is modelled with transitions which affect variables corresponding to both of the parts. We will refer to the individual variables and their associated possible behaviour as the components of our ESFM.

The preferred method is implemented for ESFMs, and can be converted to other formalisms to this representation for searching (ensuring we preserve parallelism on conversion). We have developed a tool for producing such ESFM models from basic LOTOS. The tool does this without state space expansion, and ensures parallel processes will be modelled with distinct components. We are also developing a tool to generate ESFMs from SDL (with data). We include results for searching a representation of the alternating bit protocol produced from a Basic LOTOS specification, and for a representation of the INRES protocol produced from an SDL specification.

## 1. GENERAL PRINCIPLES

This section gives an outline of the approach to searching that underlies the preferred system. We begin with the basic ideas that motivate the approach. We then give a simplified description of the problem and develop the properties we need to underline the system.

### 1.1 Outline of Intended Operation

There are three features that we will try and make use of to develop solutions to the problem of finding a path to a specified goal. First, we use properties of the behaviour of individual components to infer properties of the solution as a whole. Second, we want to ensure the approach can exploit any parallelism between the behaviour of individual components. Thirdly, where different possible solutions have behaviour in common, we try and develop these solutions together exploiting their commonality as far as possible.

We can do the first and second of these by noting that if the goal requires, for example, variable Va to be set to true, then any path to the goal must include a transition that sets Va to true. If we can find a transition that sets Va and effects no other variables, we can (usually) solve for Va in isolation. So the basic idea is to build up a picture of transitions we will need to set each of our variables to the required value, and the more "independently" these transitions act, the simpler it is to integrate them into a complete solution.

Turning to the third feature, when we look at the transitions we could use to set Va, we will usually find that they have some requirements on the value for other variables that are common to all of them. For example, we may find that all the transitions that set Va to true all need Vb to be set to true before any of them can occur (in real examples, Vb set to true might indicate that a connection has been set up). So we then know whichever transition we use to set Va, we will need to precede it with a transition to set Vb. In effect, we deal with all possible ways of setting Va at the same time, and we continue this for as long as they have something in common. This allows us iteratively to build a picture of the properties any solution must satisfy, rather than examining each possible solution in turn.

### 1.2 THE EFSM Model

We only consider for this embodiment EFSM's for which all components have a finite set of values. We index the components over finite set $I$; for each $i \in I$ we let $V_i$ be the set of possible states for this component.

**Defn 1** *An EFSM $\varepsilon$ is defined as a set of transitions T, where (if $\Pi$ indicates cartesian product)*

$$T \subseteq \bigcup_{I' \subseteq I} \left( \prod_{i \in I'} V_i^2 \right) \qquad (1)$$

So a transition $t \in T$ is a collection of associated changes to certain of the components. We introduce a signature function which tells us which components are effected:-

**Defn 2** *We define a signature function $\iota : T \mapsto P(I)$ - where $P(A)$ denotes $2^A$ - as*

$$\iota(t) = I' \Leftrightarrow t \in \prod_{i \in I'} V_i^2 \qquad (2)$$

We define the behaviour of the EFSM in terms of the allowed paths - (see **Defn. 6**). EFSMs will also have a labeling function associating input/output events with each transition. For our search problem, we need to find a sequence of transitions to our goal. We can then apply the labeling function to arrive at the corresponding sequence of input/output events. The labelling used does not effect the search though, so we will not need to consider it here.

### 1.2.1 Associated Graphs

We can associate a directed graph $G$ over the vertex set $V = \Pi_{i \in I} V_i$ with our EFSM. We will refer to this as the global graph to distinguish it from the graphs we introduce to represent the behaviour of the individual components. We define $\pi_i : V \rightarrow V_i$ as the usual projection operator; $\pi_i$ will mean the induced map for sets constructed from V.

We can represent each transition in our EFSM as a set of edges in the global graph. This set has the vertex-vertex pairs components corresponding to the signature of the transition. The behaviour for other components is to allow any self loop.

**Defn 3** *Let $EL_i = \{<v,v>| v \in V_i\}$ be the set of all self loops. We define*

$$\mathcal{E} : T \rightarrow \mathcal{P}\left(V^2\right),$$

*by*

$$\mathcal{E}(t) = \left\{ e \in V^2 \mid e_i = t_i, i \in \iota(t); e_i \in EL_i \text{ otherwise} \right\},$$

*where $e_i = \pi_i(e)$ etc.. We define the global graph as $G = \langle V, E \rangle, E = \varepsilon(T); V = \Pi_{i \in I} V_i$*

The global graph could be used as an alternative starting point for describing the EFSM (there is a unique EFSM we can associate with any graph whose vertex set is described as a product). The EFSM form makes independence in the action of the transition on variables more explicit, and it is a more realistic starting point for the data structures the algorithms actually work with. The graph form is more useful when looking at properties. As they are equivalent, we will use them interchangeably - whichever is more convenient. We will also need notation for the behaviour of the individual components:-

**Defn 4** *We define the component graphs as $G_i = G(V_i, E_i)$, where $E_i = \{e_i \mid e \in E\}$.*

### 1.2.2 Paths and Cutsets

**Defn 5** *Let $P_G \subset E^*$ be the set of all edge paths in G (where $E^*$ denotes all finite sequences over E): $\bar{P}_G$ be the set of all acyclic edge paths (no repeated edges in the path). For $E^a$, $E^b \subseteq E$, let $P_G(E^a, E^b)$ be the set of all edge paths which join an edge in $E^a$ to one in $E^b$; let $\bar{P}_G(E^a, E^b)$ be the corresponding set of acyclic paths.*
*Let*

$$\Gamma_G(E^a, E^b) = \left\{ C \subseteq E \mid (\forall x \in \bar{P}_G(E^a, E^b))\ els(x) \cap C \doteq \emptyset \right\}$$

*be the set of cutsets between $E^a$, $E^b$ (els(x) short for elements). We say C is a minimal cutset if no proper subset of it is also a cutset.*
We will abbreviate $P_G$ as $P$, $P_{G_i}$ as $P_i$ etc. Similarly for $\Gamma$. We will use $\Gamma^i(E^a, E^b)$ to denote $\pi_i^{-1}$. $(\Gamma_i(E_i^a, E_i^b))$.
The general search problem is then given $E^a$, $E^b \subseteq E$, find an $x \in \bar{P}(E^a, E^b)$ or show that no such $x$ exists. Note if our real problem is presented in terms of vertex sets, we can always use the corresponding self loops as our $E^a$, $E^b$ sets.
We will need a few results about the relation between paths, cutsets, etc. between our various graphs.

**Result 1**

$$x \in E^* \text{ and } (\forall i \in I)(x_i \in P_i) \Leftrightarrow x \in P \tag{3}$$

$$x \in \bar{P} \quad \not\Longrightarrow \quad \exists i : x_i \in \bar{P}_i \tag{4}$$

$$(\forall i \in I)\Gamma^i(E^a, E^b) \subseteq \Gamma(E^a, E^b) \tag{5}$$

$$C_i \text{ minimal} \quad \not\Longrightarrow \quad \pi_i^{-1}(C_i) \text{ minimal} \tag{6}$$

The first result follows from edges being adjacent in G if and only if they are adjacent for all components. This then yields the third result, which tells us we can construct cutsets for *G* out of cutsets for the component graphs. The second and fourth results are cautionary notes. The fact that we want an acyclic path in *G* does not mean we can consider only acyclic paths for some of our components. Also, cutsets constructed from component cutsets need not be minimal - it can contain edges which do not form part of any acyclic path.
Finally on paths, we look at the relation between transitions, signatures and paths. We start with a definition of paths in our EFSM:-
**[0056]** **Defn 6** *For $\tau = \langle \tau(r) : r = 1..n \rangle \in T^*$, we define $sub_i(\tau) \in E_i^* = \langle \tau(r)_i : r \in R_i \rangle$ where $R_i = \{r = 1..n \mid i \in {}_i(\tau(r))\}$. We can then define the set of paths in T as*

$$P_T = \{\tau \in T^* \mid (\forall i \in I)\ (sub_i(\tau) \in P_i)\} \tag{7}$$

Next, we relate this to paths in our global graph. First we look at possible edge sequences that might be associated with a transition sequence. For $X \in (P(E))^* = \langle X(r) : r = 1..n \rangle$, we define $X^* = \{x \in E^* \mid (\forall r)(x(r) \in X(r))\}$. We will refer to elements of $(P(E))^*$ as edge set sequences, or ESSs for short. Then we can show

**Result 2**

$$\tau \in P_T \Leftrightarrow (\varepsilon(\tau))^{\bullet} \cap P \neq \emptyset \qquad (8)$$

So those $X(r)_i$ which correspond to all self loops can be ignored when considering what paths are possible (and fill in appropriate self loop values after). We can generalise this to sequences over arbitrary edge sets by defining a signature for arbitrary edge sets. We then use this to give a simpler result about $P$ in terms of the component $P_i$s.

**Defn 7** *We define a signature $\varsigma$ : $P(E) \mapsto P(I)$ for sets of edges in our global graph as $\varsigma(F) = \bigwedge\{i \in I \mid (\forall e \in F) (e_i \in EL_i$ and $(\forall e'_i \in EL_i) e[e'_i/e_i] \in F)\}$, where $\_[\_/\_]$ denotes substitution.*

- so in particular $\varsigma(t) = \varsigma(\varepsilon(t))$. We can then generalise the notation of $sub_i$ to ESSs.

**Defn 8** *Let $X = \langle X(r) : r = 1..n)$ be an ESS. Let $R_i(X) = \{r\in[1,n] \mid i \in \varsigma(F(r))\}$. For $x \in X^{\bullet}$, define $sub_i(X,x) = \langle x_i(r):r \in R_i\rangle$.*

The general result for possible paths through ESSs is then

**Result 3**

$$\exists x \in X : (\forall i \in I)(sub_i(X, x) \in P_i) \quad \Leftrightarrow \quad X^{\bullet-} P \neq \emptyset \qquad (9)$$

### 1.2.3 Algorithm in Principle

We will use the last result to develop cutsets for ESSs. The intention is to use an ESS to represent a series of sets that we know any path must go through in sequence. We then need the idea of 'derivative sequences' for the possible sequences that 'fit' a given ESS. First some sequence definitions:-

**Defn 9** *For $x, y \in A^*$, $B \subset A$, $a \in A$, $x|_B$ denotes x with those elements not in B discarded. Then we define $x \subseteq y$ if $x|_{els(y)} = y$; $x \subseteq.. y$ if $x \subseteq y$, and x and y start and finish on the same value. We define the possible derivative paths of x as $\delta(x) = \{y \in A^*|x \subseteq.. y\}$. For ESSs, we will use $\delta^{\bullet}(X)$ to mean $\delta(X^{\bullet})$. We use $x \uparrow^r a$ to denote x with a inserted directly after x(r).*

The preferred embodiment is based on developing an ESS. X, for which $\delta^{\bullet}(X) \cap \bar{P} \neq \emptyset$. The important step will be grow X by adding in new cutsets. We might choose $r$, $r + 1$ for which $\exists C_i \in \Gamma_i(X_i(r).X_i(r + 1))$ , and insert $\pi_i^{-1}(C_i)$ between $X(r)$ and $X(r + 1)$. It then follows from our definitions that $\bar{P} \cap \delta^{\bullet}(X) = \bar{P} \cap \delta^{\bullet}(X_{new})$.

Alternatively we can note **result 3**, which tells us we can ignore the $X(r)$ for which $i \notin \varsigma(X(r))$ when looking at possible paths in component $i$ - and therefore cutsets. So we can look for cutsets in component $i$ between any $r1$, $r2$ for which $r1 < r' < r2 \Rightarrow i \notin \varsigma(X(r'))$. Having found a cutset for component i, we do not know where we need to insert it between $r1$ and $r2$, but we do know that any derived path must correspond to one of the possible insertions:-

**Result 4** *Let $X = \langle X(r):r = 1..n\rangle$, $X(r) \subseteq E$. If i. r1,r2, C satifiy $r1 < r2$: $(\forall r1 < r < r2)$ $i \notin \varsigma(X(r))$;$C \in \Gamma^i(X(r1).X(r2))$ then*

$$\bar{P} \cap \delta^{\bullet}(X) = \bar{P} \cap \bigcup_{r1 \leq r' < r2} \delta^{\bullet}(X \uparrow^{r'} C) \qquad (10)$$

In general then, we see we can represent the possible extensions to our ESS by using a partially ordered collection of edge sets - which explains the choice of data-structure in the next section.

### 2 Algorithm Framework

Having established the basic principles, we now need a framework for our system in which to develop this approach. We introduce the data structure we will use, and look at various evolution operators we will need on it. We set out the properties we need of our operators, and describe how these operators can be combined into a complete algorithm. We then compare particular choices for evolution operators, and why we believe using cutsets offers an efficient choice.

### 2.1 Search Data Structure

We start by introducing a data structure to represent the state of our search. As suggested in the last section, we will need a partially ordered set of edge sets:-

**Defn 10** *We define a search $\Sigma$ over graph G as a tuple $\langle J, <. \alpha\rangle$. J is an indexing set; $\alpha : J \mapsto P(E)$ associates edge sets with indexes, and < is a partial order on J.*

$\Sigma$ is used to represent a (generally large) collection of paths, and their possible derivatives. We associate with $\Sigma$ a set of ESSs (one for each possible dominating total order on J), and thence an associated set of paths and derivative paths:-

**Defn 11** *For a partial order < on J, we define $D_<$ as the set of possible dominating total orderings on J; $D_< = \{d : 1..|J| \mapsto J \mid d(n1) < d(n2) \Rightarrow n1 < n2\}$. For $d \in D_<$, let $\alpha(d)$ denote the ESS $\langle\alpha(d(r)) : r = 1..n\rangle$. We then define the set of ESSs associated with a search $\Sigma$ by $\rho : \Sigma \mapsto P((P(E))^*)$ where*

$$\rho(\Sigma) \quad = \quad \bigcup_{d \in D_<} \alpha(d) \qquad\qquad (11)$$

We will abbreviate $(\rho(\Sigma))^\bullet$ to $\rho^\bullet(\Sigma)$, and define $\delta(\Sigma)$ as $\delta((\rho(\Sigma)))$. We use $\Sigma_{null}$ to denote any $\Sigma$ for which $\rho^\bullet(\Sigma) = \emptyset$.

### 2.2. Evolution Operators

This embodiment uses three operators which iteratively develop the value of the search: - extension where we insert a new term; pruning where we subset the searcn while still retaining valid options; and splitting, where we split the search into two parts which we go on to examine in turn. We set out the properties we need for each of these operators below. In what follows, $\Sigma = \langle J, \alpha, <\rangle$, and $\Sigma' = \langle J', \alpha', <'\rangle$.

We say a relation $\xrightarrow{x}$ between searches is an extension operator if $\Sigma \xrightarrow{x} \Sigma'$ implies

$$J' = J \cup \{j_{new}\} \; ; \; \alpha'|_J = \alpha; \; <'|_J = <,$$

and:-

$$\text{x1)} \quad \bar{P} \cap \delta^\bullet(\Sigma) \neq \emptyset \Rightarrow \bar{P} \cap \delta^\bullet(\Sigma') \neq \emptyset$$

and

$$\text{x2)} \quad \rho^\bullet(\Sigma) \cap \bar{P} = \emptyset \Rightarrow \Sigma \xcancel{\xrightarrow{x}}$$

$$\text{x3)} \quad (\rho^\bullet(\Sigma) \cap \bar{P} = \emptyset \text{ and } \delta^\bullet(\Sigma) \cap \bar{P} \neq \emptyset \text{ and } |\rho^\bullet(\Sigma)| = 1) \Rightarrow \exists\Sigma' : \Sigma \xrightarrow{x} \Sigma'$$

$$\text{x4)} \quad \exists J_{max} : |J| > J_{max} \Rightarrow \Sigma \xrightarrow{x} \Sigma_{null}$$

**x1** ensures that if there was at least one possible derivative solution then there still is. **x2** ensures that if we have reached a solution, then the extension operator will fail - this is to ensure we will terminate on first encountering a solution. Finally, if there is a solution,**x3** ensures $\xrightarrow{x}$ will keep going - at least in the case where there is only one possible sequence in $\rho^\bullet(\Sigma)$. **x4** is needed to ensure that we can not keep extending indefinitely. We will need this in the case where $\delta^\bullet(\Sigma) \cap \bar{P} = \emptyset$.

We say a relation $\xrightarrow{p}$ between searches is a pruning operator if $\Sigma \xrightarrow{p} \Sigma'$ implies $J' = J$, and : -

$$\text{p1)} \quad (\forall j \in J) \; \alpha'(j) \subseteq \alpha'(j)$$

$$\text{p2)} \quad (\forall j1, j2 \in J) \; j1 < j2 \Rightarrow j1 <' j2$$

$$\text{p3)} \quad \bar{P} \cap \delta^{\bullet}(\Sigma) \neq \emptyset \Rightarrow \bar{P} \cap \delta^{\bullet}(\Sigma') \neq \emptyset$$

$$\text{p4)} \quad \Sigma' \neq \Sigma$$

**p1-p3** tell us pruning operators can only restrict the set of possible sequences. In particular, note **p2** implies $D'_< \subseteq D_<$, so $\rho^{\bullet}(\Sigma') \subseteq \rho^{\bullet}(\Sigma)$. **p3** ensures we do not prune away all our possible solutions. **p4** guarantees we perform some pruning, so in fact $\rho^{\bullet}(\Sigma') \subset \rho^{\bullet}(\Sigma)$. Then if $\rho^{\bullet}(\Sigma)$ is finite, we are guaranteed pruning we will terminate after a finite series of iterations.

We say a relation $\underline{\;s\;}$ between searches and pairs of searches is a splitting operator if $\Sigma \; \underline{\;s\;} \; (\Sigma1.\Sigma2)$ implies:-

$$\text{s1)} \quad \rho^{\bullet}(\Sigma) = \rho^{\bullet}(\Sigma1) \cup \rho^{\bullet}(\Sigma2),$$

and the $\rho^{\bullet}(\Sigma1) \; \rho^{\bullet}(\Sigma2)$ are disjoint and nonempty

$$\text{s2)} \quad |\rho^{\bullet}(\Sigma)| > 1 \Rightarrow \exists \Sigma1. \Sigma2 : \Sigma \; \overset{s}{\text{—}} \; (\Sigma1. \Sigma2)$$

**s1** ensures we do not loose any possible paths. We will need $\Sigma1$ and $\Sigma2$ both different from $\Sigma$ to ensure termination. Ensuring they are also disjoint is obviously sensible from an efficiency point of view. **s2** ensures our split operator is not allowed to fail.

### 2.3 Top Level Algorithm

We can now describe the top level operation of the algorithm - or rather algorithm schema, since there are many choices of relations that will satisfy the required properties. Given graph $G$, to find $x \in \bar{P}(E^a, E^b)$,
**A0** Let $\Sigma_0$ be defined by

$$J_0 = \left\{ j^a, j^b \right\};$$

$\alpha_0(j^a) = E^a; \; \alpha_0(j^b) = E^b; \; j^a <_0 j^b$. Initialise variable $\Sigma$ to $\Sigma_0$; return(LOOP($\Sigma$))
LOOP($\Sigma$):

    **A1** If $\Sigma \; \underline{\;z\;} \; \Sigma'$, return(LOOP($\Sigma'$))
    **A2** If $\Sigma \; \underline{\;p\;} \; \Sigma'$, return (LOOP($\Sigma'$))
    **A3** If $\Sigma = \Sigma_{null}$, return(fail)
    **A4** If $\rho^{\bullet}(\Sigma) \cap \bar{P}(E^a, E^b) \neq \emptyset$, return($x$) for some $x \in \rho^{\bullet}(\Sigma) \cap \bar{P}(E^a, E^b)$
    **A5** $\Sigma \; \underline{\;s\;} \; (\Sigma1, \Sigma2)$. return(LOOP($\Sigma1$)) unless this fails, in which case return(LOOP($\Sigma2$)).

The properties for our evolution operators ensure we will terminate after a finite series of operations. To see this, first note for any $\Sigma$ we call loop on $|J|$ will be bounded (**x4**). Let $M = |\rho^{\bullet}(\Sigma)|$, so $M < J_{max}!.|E|^{J\max} = M_{max}$. Then our execution tree has finite depth, for as we descend, between any execution of A1, we can have at most $4 * M_{max}$ steps (since A2 and A5 strictly decrease M), and we can only have $J_{max}$ calls to A1. The execution tree has degree at most 2, so it is finite.

In the case where there is a solution in the $\Sigma$ we are considering, **x3** and **s2** ensure we will not deadlock. If there is no solution, **x4** ensures we will eventually terminate with $\Sigma_{null}$ and return fail from the call to this particular loop. Finally, we notice **x1**, **p3** and **s1** ensure that if there are any solutions, the algorithm must return one.

## 2.4 Choice of Extension Operator

The preferred schema we have described so far is very general. In fact by appropriate choice of operators, we can use it to describe both depth and breadth first searching, as well as the algorithm we are interested in. Here we set out a general idea of why we expect the cutset approach to offer a significant advantage over depth/breadth first searching. We also compare it with the LOTOS goal directed search algorithm.

### 2.4.1 Comparison with Breadth/Depth first in theory

We let $adj$ $(e)$ denote the set of adjacent e's. For breadth first searching, we start with $\alpha(j1) = adj(E^a)$, $\alpha(j2) = adj(\alpha(j1))$ etc. For depth first we use the same extension operator, except we fail if $|\alpha(j)| > 1$ (we will also need to build in detection of termination and looping). In either case, we are effectively considering the sequence of sets $E^a$, $adj(E^a)$, $adj^2(E^a)$ etc. For most graphs corresponding to protocol behaviour $adj^r(E^a)$ grows exponentially with r up to some limit (of order $|V|$), and then decreases again.

For cutsets, at each step we look for a cutset $C_i$ in one particular component (which applies to all orderings of $J$). As we have freedom to minimise $C$ over each $i$ and over different choices of $i$, the resulting new $|\alpha(j_{new})|$ values are usually small. In searching DTP, we find a typical sequence of $|\alpha|$ sizes using the cutset approach will be 5, 10, 20, 10, 50, 200,.... and although there will be a general increasing trend, it can have significant decreases also (N.B. these are sizes of the $\alpha$ sets, which depend on the representation used -see 4.1). With adjacency sets, in DTP we would see something like $|\alpha|$ increasing as 50, 500, 2500, 12500,.. So the first advantage is that the sizes of the $\alpha$ sets are considerably smaller.

Perhaps less obviously, at least for reasonably large protocols, it is quicker to generate a new $\alpha$ value using a cutset than it is to find the adjacency set for one particular edge. For DTP $|T| = 10^{12}$. Adjacency is a property of edges, not of transitions (whether two transitions are 'adjacent' depends on the path leading up to the first of the two transitions). When developing a sequential path in terms of transitions, we have to try each element of $T$ in turn - there is little we can do by way of precalculated relations, so calculating adjacency for one edge takes order $|T|$. For DTP, generating such a menu takes between 30 - 60 seconds (implemented in prolog). As this is simple to calculate, it is possible to produce extremely efficient implementations which offset this time (e.g. bitstate [4]), but it will still be overwhelmed by the exponential growth in the size of the adjacency sets.

To find a cutset $C_i$ yielding a minimal $C$, we apply the Ford-Fulkerson algorithm which takes a small order polynomial time in $|V_i|$. We can do a one off pass of our transition set to find $\pi_i^{-1}$ $(e_i)$ in terms of transition sets. Applying this function to $C_i$ then takes order $|C_i|$ so again bounded by $o(|V_i|)$. So (excluding our one time pass for $\pi$) finding a cutset for one particular space is a small order polynomial in $|V_i|$. Also, as we generate $\Sigma$ iteratively, at each new step we will have already calculated most of the results we will need. In practise, for DTP setting up values for $\pi$ takes about 10 minutes, and is performed as part of the 'reading in' stage. After this, finding a minimal C (over all possible component cutsets, reusing previous results where possible), take around 5-10 seconds to find.

### 2.4.2 Comparison with Depth first in Practise

Direct comparisons with results using depth/breadth for DTP are not normally possible since we have normally met space limitations before completing a path. As an indication though, we can obtain results for depth first if the user chooses the next edge to use at each step (using a menu system). For a typical example the path is 20 events long; menus take at least 30 seconds to generate, so even with user intervention it takes about 10 minutes to find the path. The average menu size is about 15 events, and at least half of the menus will have size > 10. So a depth first search takes at least 10 minutes, and has at best a 1 in $10^{10}$ chance of achieving this time. By comparison, the algorithm described here will find the path in 3 minutes.

### 2.4.3 Comparison with Goal directed searching for LOTOS

We return to the algorithm in [1] and attempt to interpret it in our context. Goals for this algorithm usually correspond to a node in the transition system. The guide assembles a possible path to this goal, with a static analysis of the specification. If it encounters a synchronization, it examines the left operand. Any synchronization requirements set up become subsequent goals in the right operand. When executing, if the goals we set up for the right operand can not be satisfied, we try another guide for the left operand. This approximates to representing a;(B1|[]|B2) with one component for both before the parallel operator occurs, and for B1 after - ($G_1$). A second component comes into effect after a1 executes, and represents B2 - ($G_2$). We search for a path in $G_1$, then search for paths to satisfy the synchronization requirements set up in $G_2$. If this fails, we return to $G_1$ and try another path, then look at paths in $G_2$ again. This would correspond to a 'sideways' search in our EFSM.

Comparing with section ⊥1 we see this approach does use componentwise behaviour to infer properties of the global graph, and it will exploit any parallelism, but it does not seem to offer any way of developing possible paths together.

With a large number of component, the chance of the first guess in $G$ , $G_2$.. working in $G_{100}$ seems small, and there is a danger of needing to track over a large part of the state space.

## 3 Operations For The Cutset Approach

We now fill in the details of the preferred choice of operators.

## 3 Representation of $\alpha$ Values

For TP, $|E| = 2^{140}$; $|T| = 10^{12}$. The cutsets we introduce for $\alpha$ will have similar orders. So if we are to have any chance of managing these sets we need a better representation. We will use collections of compatible component edges :-

**Defn 12** *An edge-tuple is $\langle \varepsilon_i : i \in I' \rangle$, where $\varepsilon_i \subseteq E_i$, $I' \subset I$. We let $\varepsilon^\bullet = \{\langle e_i : i \in I' \rangle \, | e_i \in \varepsilon_i\}$.*

We then need to find a minimal set of $\varepsilon$'s which will span $T$ - i.e. $\Theta = \{\varepsilon 1, \varepsilon 2,...\}$ with $\Theta^\bullet = \cup_{\varepsilon \in \Theta} \varepsilon^\bullet = T$, and $|\Theta|$ minimal. We say two transitions are incompatible if we can generate a new transition $\notin T$ by exchanging some of their components. Then if we take a graph over $T$ with incompatible transitions adjacent, finding a minimal $\Theta$ is equivalent to finding a minimal colouring for this graph. So for TP, computing a minimal $\Theta$ is impractical (although it may be a sensible approach for smaller protocols).

A better alternative is to maintain some $\Theta$- style representation as we generate our EFSM (most definitions of behaviour have more structure which allows some grouping to be used as we flatten to a set of transitions). We can then perform pairwise tests for compatibility between $\varepsilon$s, and arrive at a reasonably small representation. For TP, we start with $|\Theta| = 12000$. After applying pairwise tests we reach $|\Theta| = 3000$. This reduction takes about 3 hours, and is probably only justified if the user intends to perform a large number of searches.

A value for $\alpha$ is then expressed as subset of $\Theta$, together with a modifier. For example, if we start with $e_i \in E_i$ as a cutset; we take

$$\theta = \left\{ \varepsilon \in \Theta \mid \pi_i^{-1}(\epsilon_i) \cap \varepsilon^\bullet \neq \emptyset \right\}.$$

We then express $\pi_i^{-1}(e_i)$ as $\theta.[i = e_i]$, where we add a modifier to tell us any value we use must have $i$th component set to $e_i$. Generally, we use $\Theta$ as a fixed basis, and perform all our computations as functions of basis+modifier. This works efficiently if we ensure our $\varepsilon \in \Theta$ have distinct $^\bullet$ values (although this makes $\Theta$ slightly larger).

Consider finding a set of edge-tuples $\theta$ for which $\theta^\bullet = \theta 1^\bullet \backslash \theta 2^\bullet$. If we know our $\varepsilon^\bullet$s are distinct, then this is just $\theta 1 \backslash \theta 2$. Without their being distinct, we can show that generally $|\theta| = \text{order}(|I|.|\theta 1|.|\theta 2|)$ (and the values of $\theta$ need not be in $\Theta$). We need to perform subtraction often, so the extra size to the $\Theta$ we start with to ensure distinctness is more than justified.

## 3.2 Extension Operator

In outline, the method looks at each component in turn. For each component, it looks at different ways of dividing the partial order in two, and calculates a minimally weighted cutset for each such division. We then choose a minimally weighted cutset over all components and divisions, and map this into a cutset for the global graph. We will also need to consider restrictions which perform an equivalent to detecting repeated verticies in normal searching (c. f. **x4**). We examine each element in turn, and then detail the overall operation.

### 3.2.1 Dividing the Partial Order

A division of a partial order identifies a 'place' we might insert a new outset. This corresponds to idea for total orders of choosing an $r$ in $1..n$ and inserting between $r$ and $r + 1$.

**Defn 13** *We define $Q_<$ to be the set of possible divisions for a partial order $<$ over $J$ by $Q_< = \{\langle K1, K2 \rangle \mid \exists K \subset J : K1 = \sup(K), K2 = \inf(\land \mid K)\}$*

(where sup / inf are the maximal/minimal elements of the set; | denotes down set i.e. closure under $<$). If $q = \langle K1, K2 \rangle \in Q$, $q_1$, $q_2$ denote $K1$, $K2$ respectively. Note it follows from the definition $(\forall q \in Q, d \in D_<)$ $(\exists n : d(n) \in q_1, d(n + 1) \in q2)$. So if we take a cutset between $\alpha(q1)$ and $\alpha(q2)$, we are guaranteed this is a cutset for each possible dominating order. Next we look at inserting new terms between $q_1$, $q_2$:-

**Defn 14** *For q = $\langle q1, q2 \rangle \in J^2$; we define $<^q$ |$_J$ as a relation on $J \cup \{j_{new}\}$ by $<^q$ |$_J$ = <; $(\forall()(j) \leq j1 \in q_1)(j <^q j_{new})$; $(\forall() (j) \geq j2 \in q_2)(j_{new} <^q j_{new})$*

The insertion will define a partial order if $q \in Q_<$ (and if $q \in Q_<$, - see below) If we let $\Sigma(q.C) = \langle J \cup \{j_{new}\}, \alpha',$ $<^q\rangle$, where $\alpha'|_J = \alpha$; $\alpha'(j_{new}) = C$, then as for $d \in D_<$ we have $C$ as a cutset between $d(n).d(n + 1)$ for some $n$, and $j_{new}$ will go between $d(n)$ and $d(n + 1)$ in the corresponding dominating order from $D_{<q}$, we know $\delta^{conj}(\Sigma) \cap \bar{P}$ is preserved. We can combine this with **result 4** to give a result for cutsets derived from components. We let

$$J(i) = \{j \in J \mid i \in \iota(\alpha(j))\}; <_i = < |_{J,\,.}$$

**Result 5**

$$q \in Q_{<_i}, C \in \Gamma^i(\alpha(q1),\alpha(q1)) \Rightarrow \delta^\bullet(\Sigma)\cap\bar{P} = \delta^\bullet(\Sigma(q,C))\cap\bar{P} \tag{12}$$

If we use the above construction to define an extension operator, **x1** follows from **result 5** above; **x2** follows from the fact that if there is a path, then there is a path in every component for some dominating order on $J(i)$ (from **result 3** ), so for any choice of

$$i. q \in Q_{<,\,.}$$

we must have some $e1 \in \alpha_i(q_1)$, $e_2 \in \alpha_i(q_2)$ with $e1,e2$ adjacent. So all $\Gamma^i(q_1, q_2)$ will be empty and the construction fails. If $|\rho^\bullet(\Sigma)| = 1$, we are effectively dealing with a single sequence, so **x3** follows as a property of $\Gamma$.

We will need more work on our operator to ensure **x4** applies (e.g. consider $V = \{1, 2\} \times \{1,2\}$; $E = \{e1,e2\}$ + self loops, where $e1 = \langle\langle 1,2\rangle, \langle 2,1\rangle\rangle$, $e2 = \langle\langle 2,1\rangle, \langle 1,2\rangle\rangle$ and self loops = $\langle\langle 1,1\rangle, \langle 1,1\rangle\rangle$, $\langle\langle 2,1), \langle 2,1\rangle\rangle$, etc.. Set $E^a = \langle\langle 1,1\rangle,$ $\langle 1,1\rangle$, $E^b = \langle\langle 2,2\rangle, \langle 2,2\rangle\rangle$. The operator will generate the sequence $e1, e2, e1,...$ as $\alpha$ values indefinitely.

### 3.2.2 Ensuring Termination

We could attempt to use the fact that any path in $\bar{P}$ can have no repeated verticies (and therefore edges). To use this we would need to deal with sets of edges. Having repeated transitions is allowed - as long as they occur in places where some of the unreferenced component values will be different. As we do not know the context transitions occur in until we finish our search, there is nothing we can say about restricting sets of transitions.

For TP $|T| = 10^{12}$; $|E|$ is order $|V| > 2^{140}$. So using sets of edges as our $\alpha$ values is unpromising. Even if we were to use them, we only know that any successful path will pick different values from each $\alpha$. If one set is a subset of another we know we can return $\Sigma_{null}$. More usually, we will only find our values overlap. It is then unclear how we might make use of the restriction that we must ultimately pick different values, apart from by complicating our structure to try and represent compatibility between edges from different $\alpha(j)$s. (We will look at compatibility, but only in terms of compatibility in each $G_i$, which is complex enough).

Fortunately, there is an alternative. First we will need the following result (The first follows by noting cutsets need only intersect acyclic paths, the second from noting $D$ is also a cutset for $A, B$):-

**Result 6**

$$C \in \Gamma(A,B) \Rightarrow C\backslash(A\cup B) \in \Gamma(A,B) \tag{13}$$

$$C \in \Gamma (A,B), D \in \Gamma(C,B) \Rightarrow D\backslash(A\cup B\cup C)\in\Gamma(C,B) \tag{14}$$

If we represent $\alpha$ based on sets of transitions, as $\varepsilon(T1)\backslash\varepsilon(T2) \subseteq \varepsilon(T1\backslash T2)$, we can apply this result to with $\alpha$ represented using transitions . The sets we use could be slightly larger than needed, but we will show it is still sufficient to ensure finite termination (and seems to present no problem in practise). We need to track which $j$'s are cutset ancestors of one another. We will also need to preserve the original value of $\alpha$ (which might be affected by subsequent pruning or splitting). So we extend our $\Sigma$ to $\langle J, \alpha, \beta, <, H \rangle$, where $\beta(j_{new}) = \alpha(j_{new})$, and is unaffected by pruning and splitting. H is a directed graph over $J$, where we add in edges $\langle j_{new}, j' \rangle j' \in q_1 \cup q_2$ (where we divide at $q \in Q_<$). Then after we have found $C \in \Gamma^i(\alpha(q_1), \alpha(q_2))$, we set $C = C \setminus \cup_{j':P_H(j,j') \neq \emptyset} \beta(j')$.

This then guarantees termination, since $H$ is bounded. If we define *depth(j)* as its maximum distance from $j^a$, $j^b$, then we can have at most $|I|$ $j$'s with depth 1. At *depth (n),* we can have at most $|I|$ children of any two possible parents, so inductively, $|H|$ is bounded if the depth is bounded. But we notice all associated transitions along any maximal depth path must be different, so we have depth at most $|T|$.

Note **result** 6 will not hold if we take $C \in \Gamma(A, B)$, $D \in \Gamma(C', B)$, $C' \subset C$, unless we know $C''$ is a cutset also. So we will need to modify **x4** and **p4** to insist the relations preserve $\delta^\bullet(\Sigma) \cap \bar{P}$. We will also need to amend $H$ when we split, which we describe later. We end by summarising the definition of our extension operator.

### 3.2.3 Definition of extension operator used

We define our choice of extension operator by $\Sigma \stackrel{\text{\it x}}{\to} \Sigma'$ if $\exists D \in \Gamma^i(\alpha(q1), \alpha(q2))$, $q \in Q_{<_i}$, with $|D|$ minimal over all $i$, $q_1$, $q_2$; and

$$H' = H \cup \{\langle j_{new}, j' \rangle | j' \in q_1 \cup q_2\} \tag{15}$$

$$C = D \setminus \bigcup_{j':P_H(j_{new},j') \neq \emptyset} \beta(j') \tag{16}$$

$$\tag{17}$$

and $\beta'(j_{new}) = C; \alpha(J_{new} = C); \beta'|_J = \beta$ etc.

### 3.2.4 Implementing

$Q_<$, can be constructed by searching through possible down sets. For cutsets, we look to construct one that is small in $\Gamma$ (if not minimal). As already mentioned, we perform a one-time pass to evaluate $\pi^{-1}$. We can then use this to weight edges in $G_i$ with $w(e) = |\pi_i^{-1}(e)|$. In actual fact, it is not essential that the cutset be absolutely minimally weighted (the size of the cutset in $G$ is only a rough guide to how desirable it is as the choice of next cut).

In the case that there is a minimal cutset common to all pairs of edges from $E^a$, $E^b$, we apply the Ford-Fulkerson MaxFlow/MinCut algorithm to find a minimal cutset. If there is no common minimal cutset, we might partition $E^a \times E^b$ into subsets which have a common minimal cutset, and apply MaxFlow/MinCut to each in turn. However, practical experience suggests this is not worthwhile. Instead, we find a cutset (not necessarily minimally weighted) by choosing edges that are adjacent to $E^a$, and lie on a path between $E^a$, $E^b$ (which we can test with a depth first search).

### 3.3 Pruning Operator

In theory, it might make sense to try and relate compatibility (connectedness) between edges in each component, and between their compatibility in terms of transitions. In practise, we have found that it rarely proves worth the computation time. Partly this is due to the fact that most spaces in an EFSM are totally connected, so testing for connectedness rarely offers any useful results. We can improve this by restricting the allowed edges in two ways. Firstly we can derive componentwise constraints on the allowed set of edges by seeing if there is any edge $e_i$ for which all of $\pi_i^{-1}(e_i)$ is disallowed by the $H/\beta$ restriction. Also, if we extend $\Sigma$ with a cut $C$ from component $i$, we can decide that this will be the first occurrence of any edge from $C_i$ between $q_1$ and $q_2$ (since our paths are bounded, any edge must have a first occurrence between $q_1$ and $q_2$, we are free to nominate this cut to be that first occurrence). We can then disallow all edges from this cutset to $\alpha(q_2)$ when considering connectedness subsequently in this component between any $j$'s included between $q_1$ and $J_{new}$.

Even then, this extra constraint is best applied to subsequent new cutsets before we set them into $\Sigma$. If this is done, the pruning operator will find no extra simplifications. So although we have implemented an algorithm for checking connectedness and relating this between components, we have found the overall algorithm nearly always performs better without it. We do however implement the extra restriction (nominating first occurrence) on the cutsets introduced by the extension operator, which is very cheap to compute, and seems to offer a reasonable improvement in efficiency.

## 3.4 The Splitting Operator

The simplest way to split $\Sigma$ is by choosing alternate orderings for two incomparable j's; or to split the value for one particular $\alpha$:-

**Defn 15** $\sum{}^{s(j1,j2)}(\Sigma1,\Sigma2)$ *if $j1|j2$; $j1 <_1 j2$, and $j1 >_2 j2$. (we will also need $j1'|j2':j1' < j1 j2 < j2'$ then $j1' <_1 j2'$ to preserve $<_1$ as a partial order).* $\sum{}^{s(j,A1..A2)}(\Sigma1,\Sigma2)$ *where $\alpha1(j) = A1$, $\alpha(2j) = A2$; $A1 \cup A2 = \alpha(A)$ etc.*

## 3.5 Splitting and < $\beta$, H >

Before we look at how we might choose a particular $j1|j2$ etc.. we need to look at the effect of splitting on the $\langle H, \beta \rangle$ part of our structure. Resolving orderings offers no problem, since we know our cutsets are cutsets for all possible orderings.

Splitting an $\alpha(j)$ is more problematic. To ensure $\bar{P} \cap \delta^{\bullet}(\Sigma)$ is preserved subsequently, we need to set $\beta_1(j) = \alpha_1(j)$ etc., and remove any $\langle j', j \rangle$ from $H$ (since **result 6** will not apply). This then allows the possibility that we may not terminate. The other alternative is to leave $\beta$ and $H$ as they are, and risk the algorithm giving a false fail. This is the current approach used. We have yet to find a real example that gives a false fail, but it is not doubt possible to construct one.

### 3.5.1 Choice of Split

The simplest approach is to make a choice at random. However, we have found it is possible to employ 'heuristic' criteria which are usually good at ensuring we have a solution in $\Sigma_1$, and so substantially improve the performance.

We will always perform a test for successful termination before we split. We test for successful termination by performing a depth first search starting at $j^a$ and then through possible subsequent $j$'s and associated $\varepsilon$ sets. If we fail to find a path through all our $\alpha(j)$, we will have established the set of possible continuous paths from $j^a$. We look at the set of paths that achieved maximum length, and use these as the basis of our choice of split. Our hope is that at least one of our maximal paths can be extended to a complete solution. So we split by choosing any necessary orderings or $\alpha$ values for our maximal paths. For example, if $j1|j2$, and $j1 < j2$ on any maximal path, we will apply ${}^{s(j1,j2)}$.

If we fail to find a split using this approach, we next choose one particular ordering (at random) used by some of our maximal paths, and split the partial order to be consistent with this ordering. After this fails, we know there is a unique $j_x$ at the end of any maximal path. Our next choice is ${}^{s(j1,j_x)}$ for some $j|j_x$ - which is still consistent with our hope for a solution amongst our maximal paths. Finally, if this fails, we know $j_x$ is comparable with all other $j$'s. In this case, we apply a modified extension operator:- we introduce the set of all edges adjacent to $j_x$ (we know one of these edges will be needed by any of our maximal paths). Note these edges will not be cutsets for any one component, as the normal extension operator has already failed, so they are computed by testing each $\varepsilon$ in turn. Computation is therefore slow. However, this last resort is rarely needed in practise, but if it is, we have found it usually proves more efficient than trying to choose between the maximal paths.

We have now shown how we can use a simple graph based model to reason about properties of paths in EFSMs, and use this to develop a search system. The systems strong point is obviously its ability to handle large state spaces. It is also 'versatile' in that the specification of the problem it uses can be derived from a variety of sources.

## 4. Example Search Tool

The specific example now described uses a search tool as the key component in a test generation tool, to automate the problem of finding paths for large and complex protocols. The tool was developed to generate tests based on an extended finite state machine description of the protocol behaviour, and has been used to generate tests for the OSI Distributed Transaction Processing Protocol.

The tool also takes as input a set of test purposes, and produces output in TTCN (a standardised language for describing tests).

## 4.2 Summary of Tool Features

### 4.2.1 Protocol Description

Its most significant feature is its ability to handle the TP protocol, which requires the ability to search a state space of some $10^{40}$ states.

It will accept descriptions of other protocols in a variety of formats, from basic LOTOS, through state tables, to an SDL 'lookalike' language. The last will form the basis of an extension to allow SDL input.

### 4.2.2 Test Purposes

The test purposes can be of the simple state/event form, or have complex test bodies with multiple events at different PCOs; and include directives to move to arbitrary states.

The test purpose input also allows the user to identify appropriate preambles for use in the test suite, and to specify which preambles are to be used in which test cases.

### 4.2.3 TTCN Output

The TTCN output is in MP format, and has been successfully read in by the NPL Developers' Toolkit, and the TTCN executer part of the VATPATS system.

The output includes declarations for testing configurations, ASN.1 definitions, Service Primitive and PDUs, and constraints.

The system allows the user to specify the placing and number of PCOs used in the testing, and will generate concurrent TTCN, with a component for each PCO.

The tool derives most of the event structure from the input protocol file. This can be augmented by the user, to allow the event definitions to be tailored.

The tool produces constraints on an as needed basis, and will use parameterised constraints to handle embedded data units.

### 4.3 Toolkit Organisation

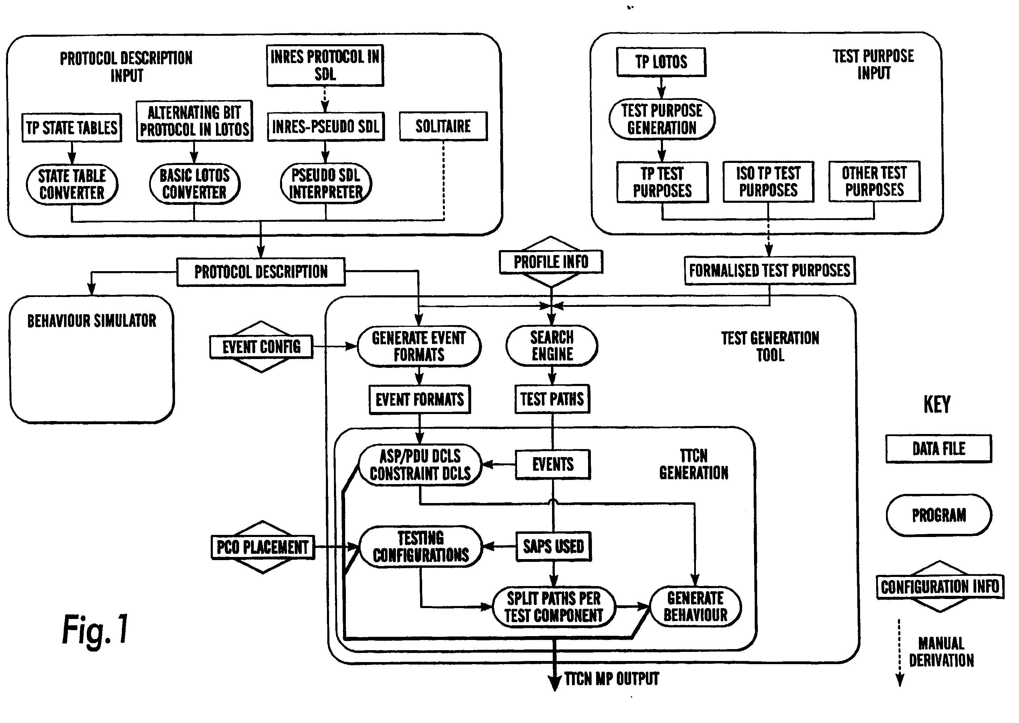

This section describes the overall organisation of the toolkit which is shown in figure 1. This shows the various ways for producing input for the generation tool, as well as details of the generation tool itself. We present an overview of form and function for each of the various aspects.

Before looking at each of the components in turn, it is worth noting a few features of the operation of the toolkit as a whole. The basic operation is to take the 'Formalised Test Purposes' data file, and process this to produce the TTCN output. The test purposes file specifies one particular profile that is to be used, so generation is for that profile. The system allows for testing with control at multiple PCOs. It uses one test component per PCO, and a master test component. The actions of any upper tester are described in terms of a test component with a PCO at the upper service interface.

### 4.3.1 Protocol Description Input

#### 4.3.1.1 Protocol Description Data File

The Protocol Description Data File (PDDF) gives a description of the protocol behaviour in terms of an extended finite state machine. The syntax is a series of statements, each describing a possible transition together with any associated input/output events. Events occur at different 'ports' (corresponding to service access points say, or internal communication channels). Transitions are specified by giving "before" and "after" values for variables.

The various options for producing this file are described in the following sections. Essentially it is just a general purpose syntax for EFSMs, so most state table descriptions can be mapped to it easily. A short program (less than 40 lines) has been produced, that generates a description of the behaviour of the 'Solitaire' game directly in this format.

#### 4.3.1.2 Generation of PDDF for OSI TP

The toolkit includes a tool for generating a PDDF for TP from the state table description given in the standard. The translation is performed in a number of steps: we start by parsing the tables and the common procedures; we pull in common procedures as needed; we produce copies of the description for different dialogues, and add mechanisms to handle the synchronisation requirements between state tables; and finally improve on the somewhat schematic event formats used in the state tables.

The process can be configured to support a given number of dialogues, although for most testing purposes three is adequate. Using three dialogues, the PDDF is 10MB.

### 4.3.1.3 Generation of PDDF from Basic LOTOS

The search engine exploits independence (or limited interaction) between variables in the EFSM description. This corresponds in LOTOS to parallelism between processes. This tool generates an EFSM model of the LOTOS specification that preserves the notion of independence, so that it produces a description that is both concise and well conditioned for use with the search engine.

The tool has been used to produce a description of the alternating bit protocol, and other basic LOTOS specifications. The simulator for PDDFs has been used to compare the behaviour of the generated description to that of the original LOTOS description.

### 4.3.1.4 Generation of PDDF from 'Pseudo SDL'

To facilitate the generation of PDDF files from SDL, the toolkit has an interpreter for a pseudo SDL language. The language is in fact not just designed as an intermediate step for SDL, but is also a reasonably high level language for describing general behaviours. It supports structured data types, and assignment of structured data between events and state variables. It also allows one behaviour to inherit structuring and behaviour from others, allowing complex behaviours to be built up systematically.

The language is sufficiently versatile to allow a fairly direct translation from SDL. This exercise has been performed manually for the INRES protocol. It should also offer a more usable starting point for producing descriptions from complex state tables.

### 4.3.2 Test Purpose Input

Test purposes drive the TTCN generation process, and as such a standard format for them must be used. The format used has been designed to be versatile to allow most styles of test purpose to be expressed in it. It can also be easily expanded to allow further possibilities in the syntax.

These formalised test purposes can be derived by hand from various sources. Some examples have been written for a test group taken from the ISO Test Purposes document. It is in theory possible to write a simple program to automate this mapping, although it does require that the input uses a consistent style (often not the case with English language test purposes).

The toolkit includes a tool for generating test purposes from the LOTOS description of OSI TP. More details on this tool can be found in an existing paper.

The formalised test purpose data file contains not only the test purposes, but also extra information on common preambles that is normally supplied by the test suite writer. This allows the user to identify useful common preambles (such as in TP, to set up an IUT as an intermediate node with two subordinates), and to specify which (if any) of these should be used for a given test purpose. It also allows the user to specify which profile (if any) is to be used; see section 3.3.3 on configuration for more on use of profiles).

The proper test purposes specify a starting state and a test body. The starting state is given in terms of required variable settings, with variables and value names as in the PDDF. The test body is a list of input/output events and states. The inputs/outputs need only be given for events that happen at ports corresponding to PCOs. States given in a test body can be used to direct the system to find what events are needed to arrive at the given state; so the user need not specify the events. The user can also define macros for any feature, to allow their reuse elsewhere in the test purposes file.

### 4. 3.3 Configuration Input

The tool allows configuration information to be supplied for profiling, for event formats, and to determine PCO placement, testing configurations, etc. These are described below.

### 4. 3.3.1 Profile Information

Generally, a profile is seen as any subsetting of the behaviour. The actual subsetting will depend on the protocol being tested. Rather than produce a revised PDDF for each profile, the system allows this subsetting to be performed dynamically by the search engine.

The search program supplies hooks to allow subsetting by various conditions. For example, it allows the user to specify a particular change for a particular variable is not to be used, such as **dch-[false-true]** allows us to specify that **dch** remains false throughout, thus ensuring only unchained profiles can be used. Apart from individual variable changes, we can disallow certain events (e.g. events involvong the channel manager in OSI TP, if channels are not supported). It can also be useful to specify conditions that must necessarily be true at the end of a search (say **du** true if we are using an unchained profile).

The purpose of the profile configuration file is to produce collections of these constraints, as needed by the profiles defined for the given protocol. So in the test purpose file for TP we will have a statement **aprof(2-2,2-2,1-1)**. say. This tells us which APT profile is to be used on each of our three dialogues. aprof itself is a function defined in the profile configuration file in terms of the hooks described above, so this be defined to disallow the edge **dl-[false-true]** on dialogue three, **dsh-[false-true]** on dialogue two, etc.

### 4. 3.3.2 PCO Placement

A given protocol can have many places where events can occur: these various places are termed ports in the toolkit. Some ports may be seen by the environment but not controlled in testing, some may be seen and controlled, and some may be internal (and therefore not controlled within testing). The purpose of the PCO configuration file is to determine which PCOs correspond to which ports. For each PCO, the file specifies a list of ports that are controlled at this PCO. Usually a PCO will control one port (e.g. PCO **l1** controls port **p(1)**,the PSAP for dialogue 1). This file also specifies the PCO type of each PCO (used for type checking in TTCN), and the name of the test component it will be used in. It also specifies 'LT' or 'UT' as required by TTCN.

When we produce TTCN, we use one parallel test component for each PCO, and (necessarily) one master test component. Events occurring at ports that correspond to no PCO are considered internal, and are not referenced in the TTCN or test purposes.

### 4. 3.3.3 Event Configuration File

To generate TTCN, the system has to decide: for each event what are the names of the fields it can take, what values these fields can take, and whether embedded data units are used. The system attempts to deduce this information from the PDDF. If there is insufficient information in that file, the user can use the event configuration file to supply extra information. The role of this file could be expanded in future to allow for the use of a predefined Abstract Syntax.

### 4. 3.4 Behaviour Simulator

The system includes a program to animate a PDDF file This is a simple menu-driven simulator, where all possible alternative transitions are presented for the user, and the user chooses the one which is to be performed next. For TP, 'all possible' transitions is unmanageable, so a tree structure of possibilities is presented instead.

The simulator can be used to check the PDDF behaves as intended, particularly to check cases where the search system produces unexpected results. This may suggest unexpected features or errors in the original protocol description.

### 4. 3.5 Search Engine and Test Paths Data File

The search engine's role is to perform searches of the behaviour specified in the PDDF. It is usually called by an interpreter of the formalised test purpose input. It can also be used directly, by specifying a start state and requirements on an end stat. We often don't mind what values most variables take, hence the end state may be only partially defined. It will return the end state it reached, and the event exchanges associated with the path to this state. Details of the operation of the search engine will be the subject of another report.

### 4. 3.6 Test Paths Data File

The output from the search engine is collated by the test purpose interpreter, and the results placed in the Test Paths Data File. For each test purpose there is one test path. Each test path is described in a terms of a number of test path steps, and the behaviour for each test path step is given. For each test purpose there will be

- a step for any preamble used in the test purpose,

- a step to move from the end of the preamble to the start of the test body,

- a step for the test body, which may, in turn, call further steps (where the test purpose uses a 'move to state' command within the test body),

• and finally, a step to return from the end of the test body to the idle state.

## 4. 3.7 TTCN Output

The TTCN output includes all TTCN features, with the exception of default trees. This feature could be added in the future. The details of the features of the TTCN output can be found in chapter 5, which gives an example of the output with comments. We describe the interesting general features.

### 4.3.7.1 Declarations

The component and PCO declarations are determined by the PCO configuration file, as described above. A proper test case index is not currently implemented.
Currently there is no facility to allow for a pre-existing Abstract Syntax for a protocol to provide the ASN.1 declarations. Instead, structures are mapped onto their most natural ASN.1 interpretation:

• The fields used by events are defined as ASN.1 types.

• Fields which take sets of terms as values are defined as sets; boolean and integer fields are not defined (the corresponding ASN. 1 type will be used).

• All other fields are expected to take a list of identifiers; these are defined as INTEGER with named numbers names corresponding to the identifiers for values of the field.

• The type APDUs is defined to represent all data units to allow for embedding.

Data units are defined as sequences over their fields. The system produces constraints as needed by the input. Constraints have parameters for any embedded data units.

## 4. 3.7.2 Behaviour

The behaviour tables are produced for each test path step from the test paths data file. Each test path step is broken down into a test step for the master test component, which calls a test step for each of the per PCO test components. The test steps for per PCO test components contain only those events pertaining to the relevant PCO from the behaviour described in the test paths data file.
Test cases then call the relevant test steps as usual, with the end of the test body identified by a verdict assignment. Note that this approach will ensure all components have completed a particular test step before any can start the next test step. This avoids the need for explicit coordination messages between test components.

## Claims

1. A method of searching for a state machine including the steps of determining properties of the behaviour of individual components of the state machine, using the determined properties to infer properties of the solution as a whole; exploiting any parallelism between the behaviour of individual components, determining where different possible solutions have behaviour in common, and when commonality is determined to exist, developing these solutions together by exploiting their commonality as far as possible.

2. A method according to claim 1, wherein the steps of using the determined behavioural properties and exploiting any parallelism include the steps of noting that if the goal requires a predetermined variable (Va) to be set to true, and then determining that any path to the goal includes a transition that sets (Va) to true.

3. A method according to claim 2, wherein when a transition is found that sets variable (Va) and effects no other variable, variable (Va) is solved in isolation.

4. A method according to claim 3, including the step of building up a picture of transitions which will be needed to set each variable to the required value.

5. A method according to any one of claims 2 to 4, wherein the step of exploiting commonality includes the step of looking at the transitions which can be used to set variable (Va).

6. A method according to any one of claims 2 to 5, wherein the method deals with all possible ways of setting variable (Va) at the same time, and continues this for as long as they have something in common.

*Fig.1*

**PROTOCOL DESCRIPTION INPUT**

- INRES PROTOCOL IN SDL
- TP STATE TABLES
- ALTERNATING BIT PROTOCOL IN LOTOS
- INRES-PSEUDO SDL
- SOLITAIRE
- STATE TABLE CONVERTER
- BASIC LOTOS CONVERTER
- PSEUDO SDL INTERPRETER

**TEST PURPOSE INPUT**

- TP LOTOS
- TEST PURPOSE GENERATION
- TP TEST PURPOSES
- ISO TP TEST PURPOSES
- OTHER TEST PURPOSES

PROTOCOL DESCRIPTION

PROFILE INFO

FORMALISED TEST PURPOSES

BEHAVIOUR SIMULATOR

**TEST GENERATION TOOL**

- EVENT CONFIG
- GENERATE EVENT FORMATS
- SEARCH ENGINE
- EVENT FORMATS
- TEST PATHS

**TTCN GENERATION**

- ASP/PDU DCLS CONSTRAINT DCLS
- EVENTS
- PCO PLACEMENT
- TESTING CONFIGURATIONS
- SAPS USED
- SPLIT PATHS PER TEST COMPONENT
- GENERATE BEHAVIOUR

TTCN MP OUTPUT

**KEY**

- DATA FILE
- PROGRAM
- CONFIGURATION INFO
- MANUAL DERIVATION

EP 1 039 391 A2